# EUROPEAN PATENT APPLICATION

(11) **EP 3 763 607 A1**
(43) Date of publication of application: **13.01.2021**
(21) Application number: 19185737.4
(22) Date of filing: 11.07.2019
(51) Int. Cl.: B62H 1/04, H02K 5/04, H02K 7/116

(54) **ELECTRIC PARKING STAND**

(71) Applicant: Hsin Chong Machinery Works Co. Ltd., Taoyuan City 335 (TW); Fuzhou Mingfang Automobile Parts Industry Co Ltd., Fuzhou (CN)
(72) Inventor: CHIANG, Chih-Ming, 335 Taoyuan City (TW); HOU, Chih-Ta, 335 Taoyuan City (TW); HSI, Jeffrey Chung-Chiang, 335 Taoyuan City (TW)
(74) Representative: 2K Patentanwälte Blasberg Kewitz & Reichel

(57) **Abstract**

An electric parking stand has a frame (100), a leg assembly (200), and a planetary gear motor (300). The frame (100) has a pair of end plates (110) and a plurality of supporting rods (120) connected between the pair of end plates (110). The leg assembly (200) is pivoted with the respective end plates (110), and the leg assembly (200) has a sector gear (220). The planetary gear motor (300) is fixed to the supporting rods (120) and engaged with the sector gear (220). Thereby, the preassembled electric parking stand could be installed onto a motor cycle by screwing the respective end plates (110) to the motor cycle.

## Description

### BACKGROUND OF THE INVENTION

### 1. Technical Field

The technical field relates to a parking stand, and more particularly to an electric parking stand that can be installed easily.

### 2. Description of Related Art

In general, the structure of a conventional electric parking stand for two-wheel vehicles comprises a motor installed at an end of a rotating shaft of a side stand, and a rotating shaft linked to the motor through a reduction gear set, and the side stand is driven by the motor to swing and elevate, and the installation of the motor and the reduction gear set is inconvenient and the reduction gear set and the rotating shaft may be loosened easily and thus having the disadvantages of unstable operation or poor transmission efficiency caused by assembling tolerance. Therefore, a vehicle body cannot be lifted smoothly or successfully.

In view of the aforementioned drawbacks of the prior art, the discloser of this disclosure based on years of experience in the related industry to conduct extensive research and experiment, and finally provided a feasible solution as disclosed in this disclosure to overcome the drawbacks of the prior art.

### SUMMARY OF THE INVENTION

Therefore, it is a primary object of this disclosure to overcome the drawbacks of the prior art by providing an electric parking stand that can be installed easily.

To achieve the aforementioned and other objectives, this disclosure discloses an embodiment of an electric parking stand comprising a frame, a leg assembly and a planetary gear motor. The frame includes a pair of end plates and a plurality of supporting rods coupled between the pair of end plates. The leg assembly is pivotally coupled to each of the end plates and includes a sector gear. The planetary gear motor is fixed to each supporting rod and engaged with the sector gear.

In the electric parking stand of this disclosure, the leg assembly includes a shaft, and the shaft and the supporting rods are configured to be parallel to each other, and both ends of the shaft are respectively and pivotally coupled to the end plates, and a side stand is fixed to a side of the shaft, and a sector gear is fixed to the other side of the shaft. The leg assembly includes a connecting cover that covers and connects a side of the shaft, and the connecting cover is fixed to the shaft.

In the electric parking stand of this disclosure, the planetary gear motor has an output shaft, and the output shaft has a drive gear engaged with the sector gear. Each end plate has a pivoting hole, and the leg assembly is pivotally coupled to each respective pivoting hole. Each end plate includes a main body and an extension extending from a side edge of the main body, and the supporting rods are coupled between the pair of main bodies, and the leg assembly is pivotally coupled to each respective extension.

In the electric parking stand of this disclosure, the frame includes a housing fixed to the supporting rods, and the planetary gear motor is accommodated in the housing. The housing has an opening, and the sector gear is passed through the opening and engaged with the planetary gear motor. The housing includes a motor box and a gearbox attached to a side of the motor box; the opening is formed at the gearbox; the planetary gear motor has an output shaft; the output shaft has a drive gear engaged with the sector gear; the planetary gear motor is accommodated in the motor box; the drive gear is accommodated in the gearbox; and the output shaft penetrates between the motor box and the gearbox. The motor box has a flange extending therefrom and the supporting rods penetrate through the flange.

The electric parking stand of this disclosure is capable of being pre-assembled and then locking the two end plates to a vehicle body of the two-wheel vehicle to complete the installation, and this disclosure has the advantages of easy installation, high-precision assembling of components, stable mechanical operation, and high transmission efficiency.

### BRIEF DESCRIPTION OF THE DRAWINGS

FIG. 1 is an exploded view of an electric parking stand of a preferred embodiment of this disclosure;
FIG. 2 is an exploded view of a frame of an electric parking stand and a planetary gear motor of a preferred embodiment of this disclosure;
FIG. 3 is an exploded view of a leg assembly of an electric parking stand of a preferred embodiment of this disclosure;
FIGS. 4 and 5 are schematic views of ascending a side stand of an electric parking stand of a preferred embodiment of this disclosure; and
FIGS. 6 and 7 for schematic views of descending a side stand of an electric parking stand of a preferred embodiment of this disclosure.

### DESCRIPTION OF THE PREFERRED EMBODIMENTS

The technical contents of this disclosure will become apparent with the detailed description of preferred embodiments accompanied with the illustration of related drawings as follows. It is intended that the embodiments and drawings disclosed herein are to be considered illustrative rather than restrictive.

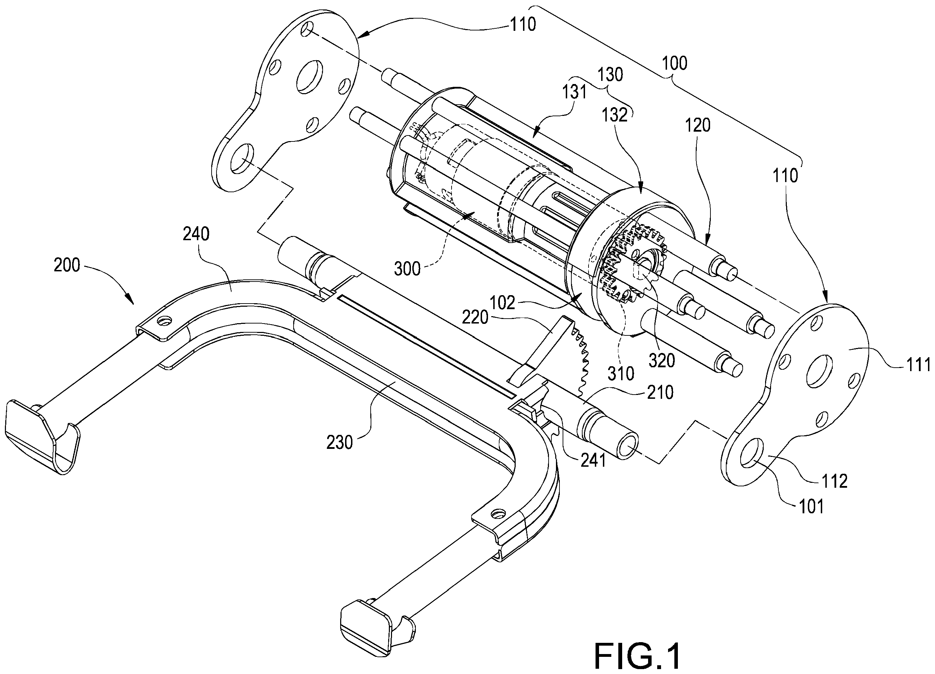

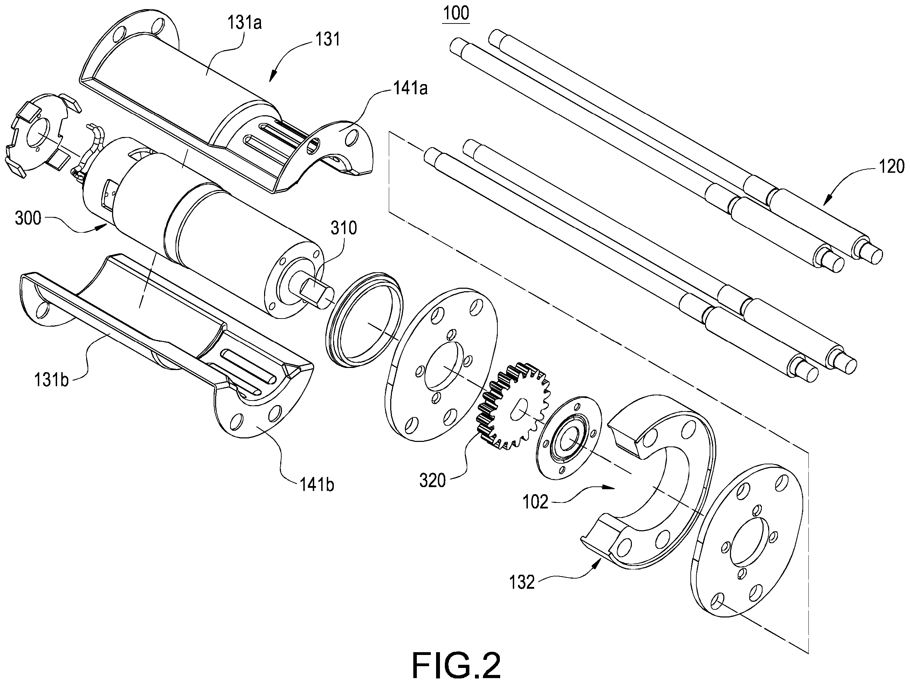

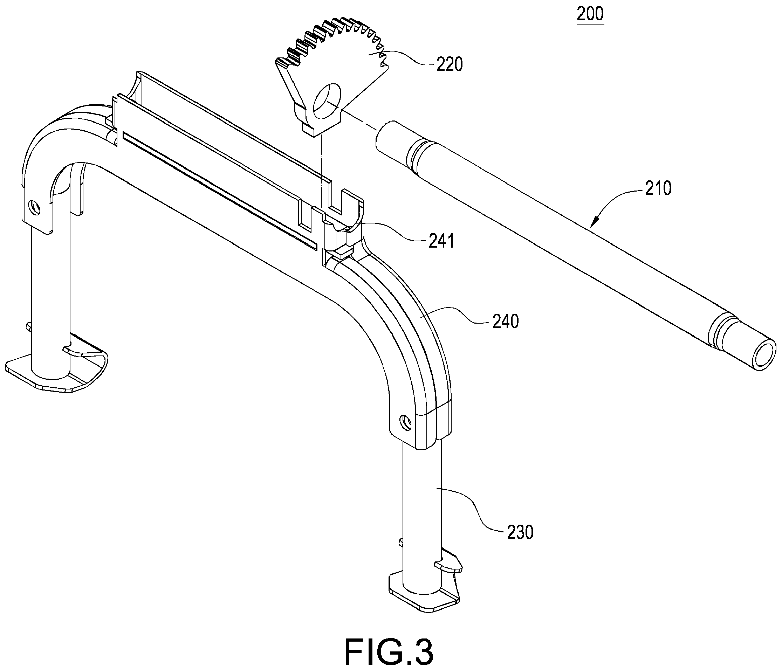

With reference to FIGS. 1 to 3 for an electric parking stand applied in a two-wheel vehicle in accordance with a preferred embodiment of this disclosure, the electric parking stand comprises a frame 100, a leg assembly 200, and a planetary gear motor 300.

In this embodiment, the frame 100 includes a pair of end plates 110 and a plurality of supporting rods 120 coupled between the pair of end plates 110 and configured to be parallel to each other. Each end plate 110 has a pivoting hole 101, and the leg assembly 200 is pivotally coupled to each respective pivoting hole 101. Each end plate 110 includes a main body 111 which is in a shape including but not limited to the shape of a circular sheet in an embodiment and an extension 112 extending from a side edge of the main body 111. In an embodiment, the supporting rods 120 are coupled between the pair of main bodies 111, and each extension 112 has a pivoting hole 101 formed thereon.

The leg assembly 200 includes a shaft 210, a side stand 230, a connecting cover 240 and a sector gear 220. In this embodiment, the shaft 210 and the supporting rods 120 are configured to be parallel to each other, so that the shaft 210 and the frame 100 have a compact configuration, and the total volume of the electric parking stand can be reduced. The side stand 230 is a U-shaped rod, and the connecting cover 240 is covered and fixed to a side of the shaft 210, and the connecting cover 240 and the side stand 230 are welded and fixed to each other. Both ends of the side stand 230 extend towards the side stand 230 and in the direction opposite to the other side of the connecting cover 240. The connecting cover 240 has a positioning frame 241 protruded from an external surface of the connecting cover 240, wherein the positioning frame 241 is in a circular arc shape corresponding to the shaft 210, and the shaft 210 is installed in the positioning frame 241 and welded and fixed to the positioning frame 241, so that the side stand 230 is fixed to a side of the shaft 210, and the sector gear 220 is disposed on the other side of the shaft 210 and the shaft 210 is passed and coupled to the arc center of the sector gear 220. Each end plate 110 has a pivoting hole 101, and both ends of the shaft 210 of the leg assembly 200 are respectively and pivotally coupled to the pivoting holes 101 on the extension 112 of each end plate 110.

The planetary gear motor 300 is fixed to each supporting rod 120 and engaged with the sector gear 220. Specially, the planetary gear motor 300 has an output shaft 310 with a drive gear 320, and the planetary gear motor 300 is engaged with the sector gear 220 through its drive gear 320. The frame 100 includes a housing 130 fixed to the supporting rods 120, and the planetary gear motor 300 is accommodated in the housing 130. The housing 130 has an opening 102 for passing the sector gear 220 through the opening 102 to engage with the planetary gear motor 300, wherein the opening 102 faces downward or diagonally downward to prevent water from entering into the housing 130. The housing 130 includes a motor box 131 and a gearbox 132 attached onto a side of the motor box 131. Specially, the motor box 131 is in a cylindrical shape, and the motor box 131 is formed by a pair of semicircular side covers 131a/131b engaged with each other, and the gearbox 132 is disposed at an end of the motor box 131, and the opening 102 of the housing 130 is formed on the gearbox 132. A flange 141a/141b extends from an edge of each side cover 131a/131b of the motor box 131, and a part of the pair of flanges 141a/141b is overlapped and positioned, and the supporting rods 120 penetrate through another part of each flange 141a/141b and the gearbox 132, so that the pair of the side covers 131a/131b can be fixed and engaged to each other while the motor box 131 and the gearbox 132 are positioned and fixed into the frame 100. In a preferred embodiment, the motor box 131 is a cylindrical motor box 131, but the shape of the motor box 131 of this disclosure is not limited to cylindrical.

The planetary gear motor 300 has an output shaft 310, and the output shaft 310 has a drive gear 320 installed thereon and engaged with the sector gear 220, and the planetary gear motor 300 is accommodated in the motor box 131 and fixed between the supporting rods 120, and the drive gear 320 is accommodated in the gearbox 132, and the output shaft 310 penetrates through a position between the motor box 131 and the gearbox 132. The sector gear 220 passes through the opening 102 into the gearbox 132 to engage with the drive gear 320.

The electric parking stand of this disclosure may be pre-assembled and then the two end plates 110 are locked to the vehicle body of the two-wheel vehicle to complete the installation. Therefore, this disclosure has the features of simple and easy installation, high-precision components, stable mechanical operation, and high transmission efficiency.

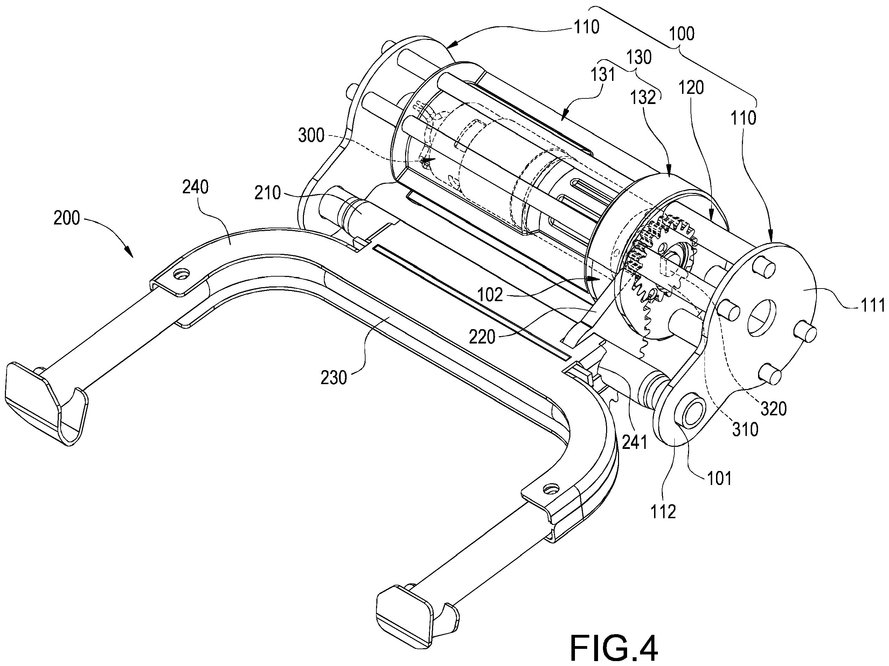

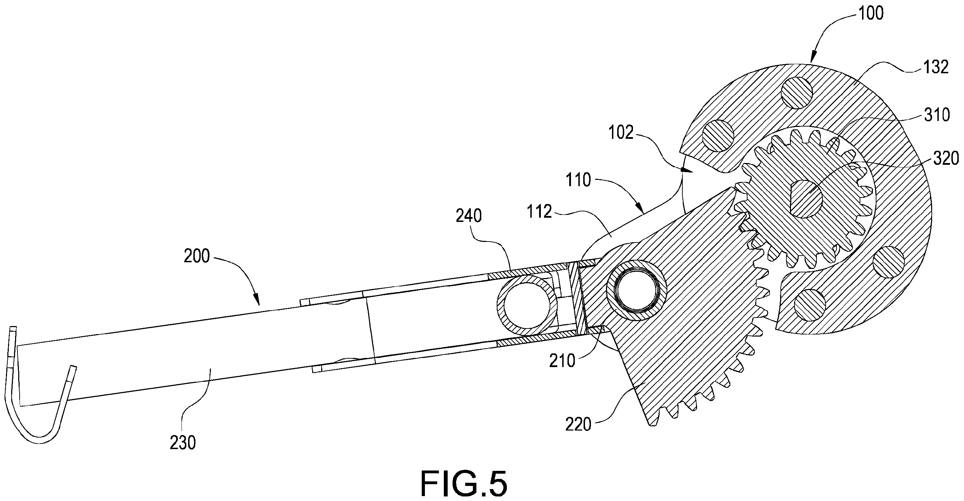

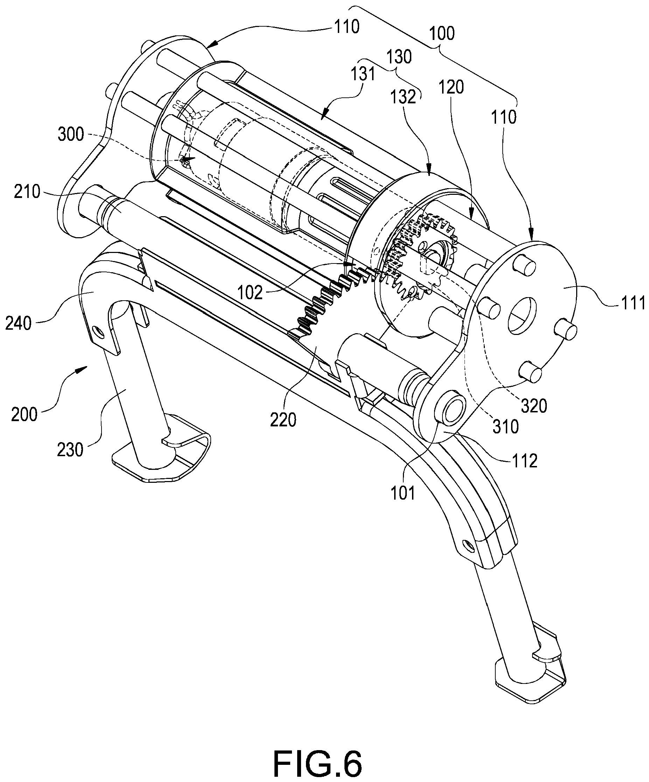

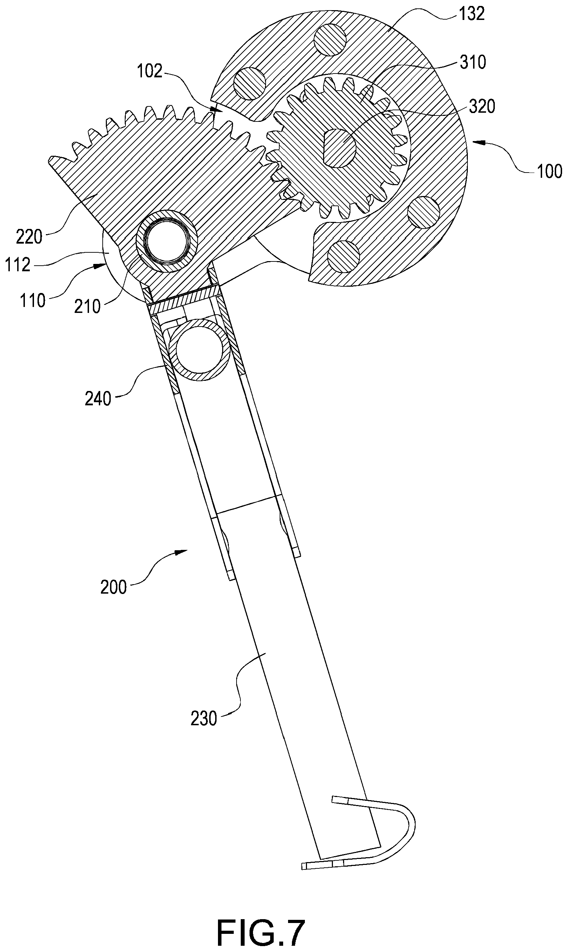

In a preferred embodiment of the electric parking stand of this disclosure, the planetary gear motor 300 can be rotated bi-directionally, and driven by the sector gear 220 through the output shaft 310 and the drive gear 320 to rotate the leg assembly 200 along the shaft 210, so as to ascend the side stand 230 as shown in FIGS. 4 and 5 or descend the side stand 230 as shown in FIGS. 6 and 7. When the side stand 230 descends, both ends of the side stand 230 abut the ground to lift the vehicle.

## Claims

1. An electric parking stand, comprising:
a frame (100), including a pair of end plates (110) and a plurality of supporting rods (120) coupled between the pair of end plates (110);
a leg assembly (200), pivotally coupled to each of the end plates (110), and including a sector gear (220); and
a planetary gear motor (300), fixed to each of the supporting rods (120), and engaged with the sector gear (220).

2. The electric parking stand of claim 1, wherein the leg assembly (200) includes a shaft (210), and the shaft (210) and the supporting rods (120) are configured to be parallel to each other, and both ends of the shaft (210) are respectively and pivotally coupled to the end plates (110), and a side stand (230) is fixed to a side of the shaft (210), and a sector gear (220) is fixed to the other side of the shaft (210).

3. The electric parking stand of claim 2, wherein the leg assembly (200) includes a connecting cover (240) covering and being fixed to a side of the shaft (210), and the connecting cover (240) is fixed to the shaft (210).

4. The electric parking stand of claim 1, wherein the planetary gear motor (300) has an output shaft (310), and the output shaft (310) has a drive gear (320) engaged with the sector gear (220).

5. The electric parking stand of claim 1, wherein each end plate (110) has a pivoting hole (101), and the leg assembly (200) is pivotally coupled to each respective pivoting hole (101).

6. The electric parking stand of claim 1, wherein each of the end plates (110) includes a main body (111) and an extension (112) extending from a side edge of the main body (111), and the supporting rods (120) are coupled between the pair of main bodies (111), and the leg assembly (200) is pivotally coupled to each respective extension (112).

7. The electric parking stand of claim 1, wherein the frame (100) includes a housing (130) fixed to the supporting rods (120), and the planetary gear motor (300) is accommodated in the housing (130).

8. The electric parking stand of claim 7, wherein the housing (130) has an opening (102), and the sector gear (220) is passed through the opening (102) and engaged with the planetary gear motor (300).

9. The electric parking stand of claim 8, wherein the housing (130) includes a motor box (131) and a gearbox (132) attached to a side of the motor box (131), and the opening (102) is formed at the gearbox (132), and the planetary gear motor (300) has an output shaft (310), and the output shaft (310) has a drive gear (320) engaged with the sector gear (220), and the planetary gear motor (300) is accommodated in the motor box (131), and the drive gear (320) is accommodated in the gearbox (132), and the output shaft (310) penetrates between the motor box (131) and the gearbox (132).

10. The electric parking stand of claim 9, wherein the motor box (131) has a flange (141a/141b) extending therefrom and the supporting rods (120) penetrate through the flange (141a/141b).
